Europäisches Patentamt

European Patent Office

Office européen des brevets

(19)

(11) Publication number: **0 300 764**
**A2**

# EUROPEAN PATENT APPLICATION

(12)

(21) Application number: **88306657.3**

(22) Date of filing: **20.07.88**

(51) Int. Cl.⁴: **B 23 D 21/06**

(30) Priority: **21.07.87 GB 8717196**

(43) Date of publication of application:
**25.01.89 Bulletin 89/04**

(84) Designated Contracting States:
**AT BE CH DE ES FR GB GR IT LI LU NL SE**

(71) Applicant: **FUSION EQUIPMENT LTD**
**Callywhite Lane Dronfield**
**Sheffield S18 6XP (GB)**

(72) Inventor: **Naylor, Graham James**
**Silverdale House**
**Rowland Bakewell DE4 1NR (GB)**

**Bridgstock, Eric**
**The Homestead Edale Road**
**Hope Derbyshire (GB)**

(74) Representative: **Houghton, David et al**
**Hulse & Co. Cavendish Buildings West Street**
**Sheffield, S1 1ZZ (GB)**

(54) Tool for plastics pipes.

(57) The invention relates to a tool for plastics pipes and for use either in the severing of a pipe length or in the removal of an external weld bead formed during the connection of adjacent pipe lengths. Ordinarily separate tools are provided for each operation and particularly with the severing of a pipe length considerable clearance is required below a pipe to permit rotatation of a tool around it. The objective of the invention is to provide a single tool able to perform both operations and which avoids the above-mentioned disadvantage , which objective is met by a construction comprising a flexible length, a means of connecting together the ends of the flexible length with provision for adjusting the spacing between the connected ends, a blade holder located on the flexible length, and handle means strategically located on the flexible length. The blade holder may be such as to selectively receive either a cutter or bead removal blade or separate blade holders may be provided for selective application to the flexible length.

Fig. 2

EP 0 300 764 A2

## Description

## TOOL FOR PLASTICS PIPES

This invention relates to a tool for plastics pipes.

During the production of a pipeline from lengths of plastics pipes, there is the need to cut the ends of the pipe lengths cleanly and square to ensure a correct butting relationship between one end of one pipe length and the adjacent end of the next pipe length. After the welding together of two pipe lengths, it is frequently required that the external weld sprue beads formed on the pipe length ends during welding are to be removed.

Ordinarily, pipe lengths are connected together on site, and hitherto the cutting of pipe ends and the subsequent removal of beads has been effected by separate tools. The most common form of cutting tool is one fashioned after the manner of a G-clamp, where the inturned end is placed behind the pipe and a cutter wheel located on a feed screw urged into contact with the pipe to the opposite side, the assembly then being rotated around the pipe and the cutter wheel simultaneously fed inwards until the pipe end is cut. The disdvantages are that any one size of G-clamp type cutter can only accommodate a limited range of pipe diameters, and considerable clearance is required to allow its rotation around a pipe, a particular difficulty when the pipe lengths are laid in a trench.

To remove the external weld sprue beads, one tool in common use is formed by a flat support bar having an angled through-slot in which is mounted a cutter blade, with a ratchet wheel to grip the cut bead as it emerges through the slot. Accurate progression of the tool around the pipe, and particularly below a pipe laid in a trench, requires considerable skill, and even in the hands of skilled operatives, there is frequent breakage of the bead, requiring the recommencement of the cutting action.

The object of the present invention is to provide a tool for plastics pipes, able to effect both pipe cutting and bead removal, and which avoids those disadvantages mentioned above.

According to the present invention, a tool for plastics pipes comprises a flexible length, a means of connecting together the ends of the flexible length with provision for adjusting the spacing between the connected ends, a blade holder located on the flexible length, and handle means strategically located on the flexible length. The blade holder may be such that a pipe cutter blade or a bead removal blade can be secured to it as and when required, but it may be preferable that the blade holder is removably secured to the flexible length, and for two blade holders to be provided, one with a pipe cutter blade and the other with a bead removal blade, and for a respective holder to be secured to the flexible length as and when required.

Thus, with the ends of the flexible length disconnected, it can be passed around a pipe, the ends connected together, and the adjustment means activated to draw the flexible length into positive engagement with the pipe, and hence the particular blade into direct contact with the pipe. The flexible length and hence the particular blade, can then be rotated around the pipe by the handles.

When pipe cutting is being effected, it is preferred that a rotatable cutter wheel is located in the holder, and as rotation of the flexible length takes place, the adjustment means is operated to draw the ends of the flexible length closer together and thus urge the cutter wheel inwardly until the pipe is cut through. Alternatively, the said adjustment means can be tightened to ensure a positive engagement as .between the flexible length and the cutter blade and the pipe, and a separate adjustment means provided to urge the cutter blade inwards as the flexile length is rotated around the pipe. When bead removal is being effected, an angled cutter blade is located in the holder, and the adjustment means operated to an extent to set the cutting edge at a position where it will cut through the bead at its base. As rotation of the flexibe length takes place, the bead is cut from the pipe and is transported through a slot in the holder.

Preferably, the flexible length is formed by a number of hinged links, each of which has a roller or a pair of wheels to bear against the pipe, and either a housing provided in replacement of one of the links to receive more than one type of blade, or two links being spaced by parallel support bars between which can be secured a removable holder with its particular blade. As a still further alternative two housings can be provided each with its own type of blade and which can be selectively secured in replacement of one of the links to enable either the cutting of a pipe or the removal of a bead.

To provide for connection and adjustment of the ends of the flexible length, a link may be pivotally secured to each end of the length, and the links pivotally secured together at their free ends, there being an adjusting screw extending across the links part-way along their length. Alternatively, a threaded nut may be pivotally secured to one endmost link to receive a screw rotatably mounted on a support member pivotally secured to the other endmost link, rotation of the screw causing the endmost links to be drawn towards each other.

As a further preference, a number of handles, e.g. three, may be secured to the flexible length to assist in the rotation of the flexible length around a pipe.

Two embodiments of the invention will now be described by way of example only, with reference to the accompanying drawings, in which:-

Figure 1 is a side elevation of a tool in accordance with the invention shown encircling a pipe;

Figure 2 corresponds to Figure 1 but shows a second embodiment of tool in accordance with the invention;

Figure 3 is a plan view of two of the links of Figure 2 illustrating their manner of connection; and

Figure 4 corresponds to part of Figure 2, but shows a second housing holding a different type of cutting blade to that illustrated in Figure 2.

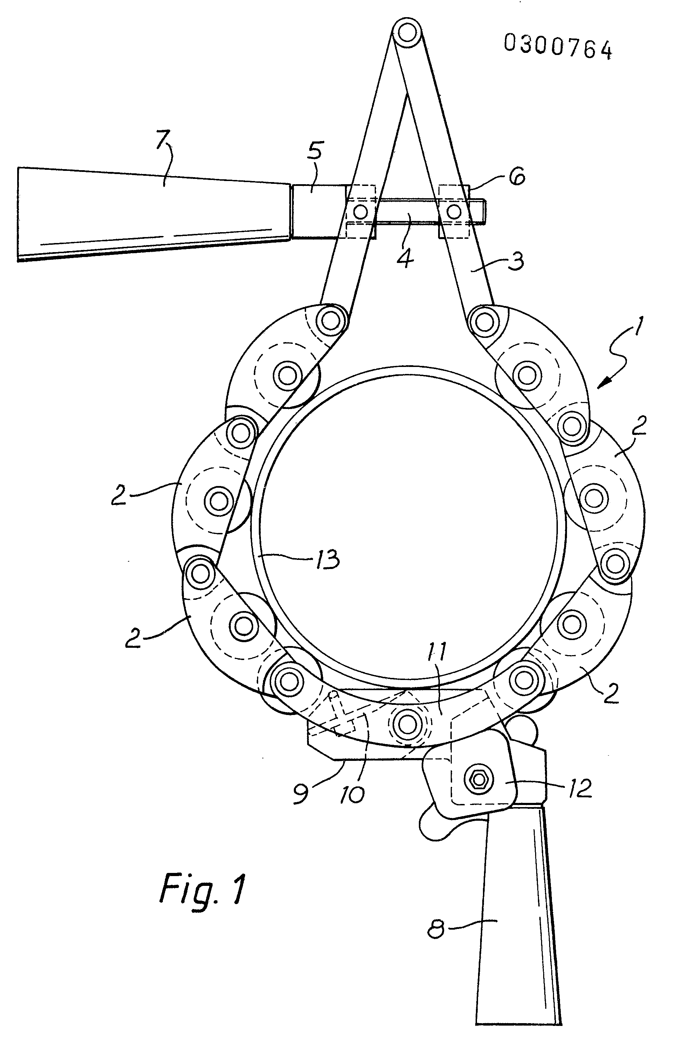

In Figure 1, a tool for use with plastics pipes is formed as a flexible length 1 consisting of a number of links 2 pivotally secured together and each having a centrally disposed roller mounted on an axle bridging the side plates of the links 2. At each free end of the flexible length, a connecting member 3 is pivotally mounted, and the connecting members 3 pivotally secured together at their outer ends. Bridging the connecting members 3 is an adjusting screw 4 extending from a mounting 5 on one member 3 to a nut 6 on the other member 3, the mounting 5 including a handle 7 to assist in rotation of the screw and to assist in the rotation of the tool around the pipe. Approximately diametrically opposed to the position of the members 3 and the associated handle 7 a further handle 8 is provided, the handle 8 being secured to a housing 9 within which is located a cutting blade 10 of a type to enable the removal of an external weld bead. The housing 9 is secured betwen spaced parallel support bars 11 in a manner permitting angular adjustment of the housing and hence the blade by an adjusting member 12 secured to the handle 8, the adjusting member 12 having four faces each of a different angular disposition that can be selectively brought into contact with the housing to set the angular disposition of the housing. Thus, different pipe diameters can be accommodated and the angular disposition of the blade 10 set for correct presentation to the outer surface of a pipe 13 to which the tool is applied.

With the adjusting screw disconnected from its nut on the member 3 and with the pivotal connection at the outer ends of the members 3 disconnected, the flexible length can be wrapped around the pipe at the location of a weld between two pipe ends and when the members 3 are reconnected and the adjusting screw fed back into the nut. Rotation of the adjusting screw then draws the flexible length tightly around the pipe and rotation of the flexible length around the pipe utilising the handles 7 and 8 causes the cutting blade 10 to slice through the weld bead lying externally of the welded connection between two pipe ends.

Although not illustrated it will be readily understood that the housing and its blade 10 can be replaced by a housing bearing a circular cutting blade to permit the tool to cut a pipe. In this form of construction, the manner of locating the flexible length on the pipe is substantially as has been described above but in this instance, as the tool is rotated around the pipe the adjusting screw is progressively rotated to continue to tighten the flexible length around the pipe as the circular blade cuts through the pipe wall.

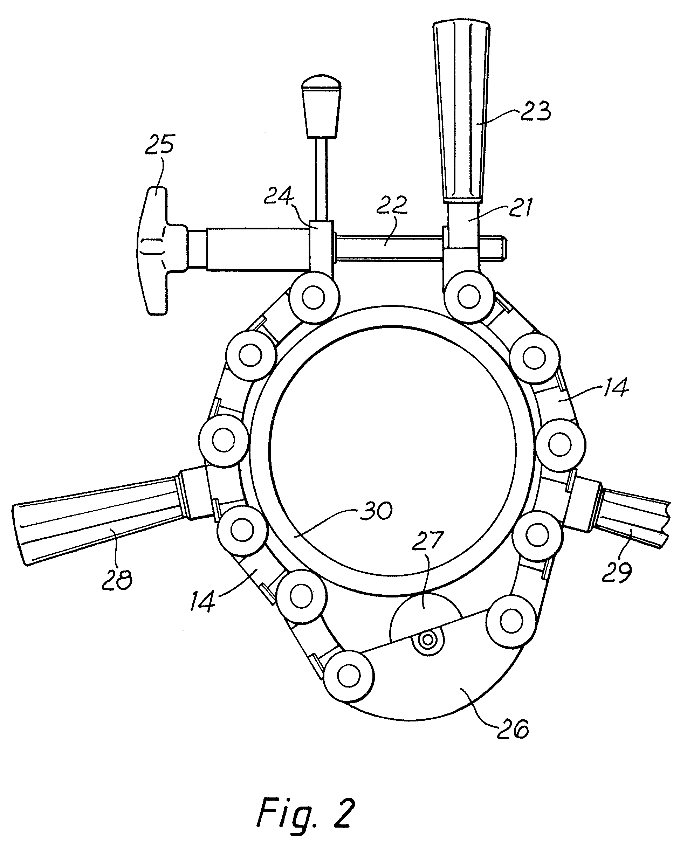

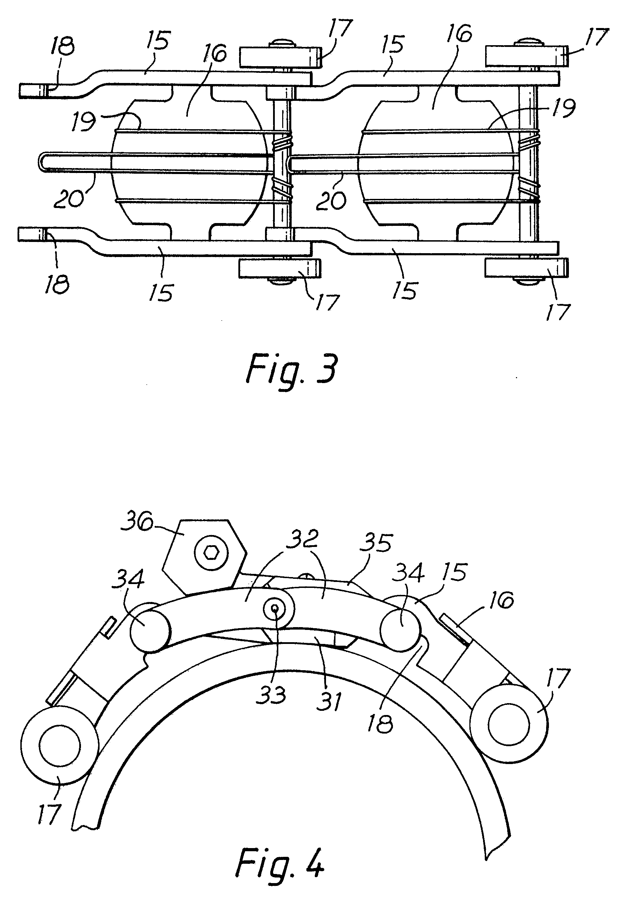

In the alternative form of construction shown in Figures 2 to 4, there is again provided a flexible length formed by a number of links pivotally secured together, but in this instance, each link 14 has two spaced and parallel side arms 15 connected by a top plate member 16, and a pair of support wheels 17 mounted on an axle at one end of each link, the side arms 15 at the opposite end of the link each having a recess 18 adapted to hook on to the axle for the support wheels on the adjacent link. As is illustrated particularly in Figure 3, engagement between the recesses of the side arms of one link and the axle of the adjacent link is maintained by spring means 19 that embodies a resilient member 20 connected to the axle of one link and extending into contact with the axle of the adjacent link.

Pivotally connected to the endmost link at one end of the flexible length is a nut 21 for engagement by an adjusting screw 22, the nut 21 having mounted thereon a handle 23. Pivotally connected to the endmost link at the opposite end of the flexible length is a mounting member 24 for the adjusting screw 22, with handle means 25 rotatably secured to the mounting member to permit the rotation of the screw.

Diametrically opposite to the connection between the outermost links of the flexible length, one of the links is replaced by a housing 26 on which is mounted a circular cutting blade 27, and in substantially equally spaced relationship along the length of the flexible length, two further handles 28, 29, are provided attached to the respective link. Thus, with the adjusting screw disconnected from the nut the flexible length can be wrapped around a pipe 30 and the adjusting screw reconnected to the nut. Thus, with the adjusting screw rotated, the outermost ends of the flexible length are drawn together to tighten the flexible length around the pipe and hence urge the cutting blade 27 into contact with the pipe. The flexible length is then rotated around the pipe by the handles, and the adjusting screw continued to be tightened until such time as the cutting blade 27 has cut through the pipe wall.

In the alternative form of construction illustrated in Figure 4, the housing and the rotatable blade 27 is replaced by a cutting blade 31 for the removal of an external weld bead at the welded connection between two pipe ends. Thus two support members 32 are provided to each side and pivotally secured together at 33, and the two support members to one side are connected to the two support members to the opposite side by axle members 34, and to which are connected the respective adjacent links of the flexible length. Mounted between the pairs of links to each side is a housing 35 on which is located the cutter blade 31, the angular disposition of the housing and hence the cutter blade being adjustable by an adjusting member 36 having a number (six shown) of faces of different angular dispositions any one of which can be brought into contact with one of the side members and thereby to set the housing at a required angular disposition. Thus in this way, a number of different pipe diameters can be accommodated employing a greater or a lesser number of links in the flexible length and with the cutter blade set for correct presentation to the exterior of the pipe.

Thus, with the tool applied around the pipe after the manner described above and the adjusting screw tightened to load the cutter blade against the pipe, the tool can then be rotated around the pipe utilising the handles and when the external weld bead can be sliced from the pipe.

length.

**Claims**

1. A tool for plastics pipes comprising a flexible length, a means of connecting together the ends of the flexible length with provision for adjusting the spacing between the connected ends, a blade holder located on the flexible length, and handle means strategically located on the flexible length.

2. A tool for plastics pipes as in Claim 1, wherein the blade holder is such that a pipe cutter blade and a bead removal blade can be selectively secured in the holder.

3. A tool for plastics pipes as in Claim 1, wherein the blade holder is removably secured to the flexible length and two blade holders are provided each with a respective pipe cutter blade and a bead removal blade.

4. A tool for plastics pipes as in any of Claims 1 to 3, and when a pipe cutter blade is provided, wherein the means adjusting the spacing between the connected ends of the flexible length is continuously operable to draw the ends of the flexible length closer together and urge the pipe cutter blade inwardly during rotation of the tool around the pipe until the pipe is cut through.

5. A tool for plastics pipes as in Claim 4, wherein the pipe cutter blade is a rotatable cutter blade.

6. A tool for plastics pipes as in any of Claims 1 to 3, and when a bead removal blade is provided, wherein an adjustment means is provided operable to set the angle of inclination of the bead removal blade.

7. A tool for plastics pipes as in any of Claims 1 to 6, wherein the flexible length is formed by a number of hinged links each of which has a roller or a pair of wheels to bear against the pipe, the hinged links being detachably secured together.

8. A tool for plastics pipes as in Claim 7, wherein a holder for one or both of the pipe cutter blade or bead removal blade is provided in replacement of one of the links.

9. A tool for plastics pipes as in any of Claims 1 to 8, wherein to provide for connection and adjustment of the ends of the flexible length, connecting members are pivotally secured to each end of the length and to each other at their free ends and there being an adjusting screw extending across the members partway along their length.

10. A tool for plastics pipes as in any of Claims 1 to 8, wherein to provide for connection and adjustment of the ends of the flexible length, a threaded nut is pivotally secured to one end of the flexible length to receive a screw rotatably mounted on a support member pivotally secured to the other end of the flexible

Fig. 1

0300764

Fig. 2

*Fig. 3*

*Fig. 4*